# EUROPEAN PATENT APPLICATION

(11) **EP 1 976 307 A1**
(43) Date of publication of application: **01.10.2008**
(21) Application number: 06834788.9
(22) Date of filing: 15.12.2006
(51) Int. Cl.: H04N 17/00, H04N 5/235

(54) **RELATIVE EXPOSURE INTENSITY MEASURING APPARATUS AND METHOD**

(71) Applicant: Leader Electronics Corporation, Yokohama-shi Kanagawa 223-8505 (JP)
(72) Inventor: IMAMURA, Genichi, Yokohama-shi Kanagawa 223-8505 (JP); TSUNEMOTO, Hideharu, Yokohama-shi Kanagawa 223-8505 (JP)
(74) Representative: Hartz, Nikolai
(86) International application number: PCT/JP2006/325045
(87) International publication number: WO 2008/072337

(57) **Abstract**

Disclosed is a method which comprises the steps of providing a video-signal output device (4), accepting a brightness component of a video signal corresponding to a first position of a subject (1) which is imaged by the video-signal output device (4), correcting a gamma (γ) value of the brightness component corresponding to the first position, accepting a brightness component of the image signal corresponding to a second position of the subject (1) which is imaged by the video-signal output device (4), correcting the gamma (γ) value of the brightness component corresponding to the second position, calculating a ratio between the gamma-corrected brightness component corresponding to the first position and the gamma-corrected brightness component corresponding to the second position, and displaying the ratio.

## Description

### TECHNICAL FIELD

The present invention generally relates to an apparatus and a method for measuring a relative exposure value received from a video signal. For example, in the present invention, based on a video signal received from a video-signal output device and by use of a brightness corresponding to a first position as a reference value, a brightness (relative brightness) corresponding to a second position is calculated so as to be measured as a relative exposure value or a relative aperture value.

### BACKGROUND ART

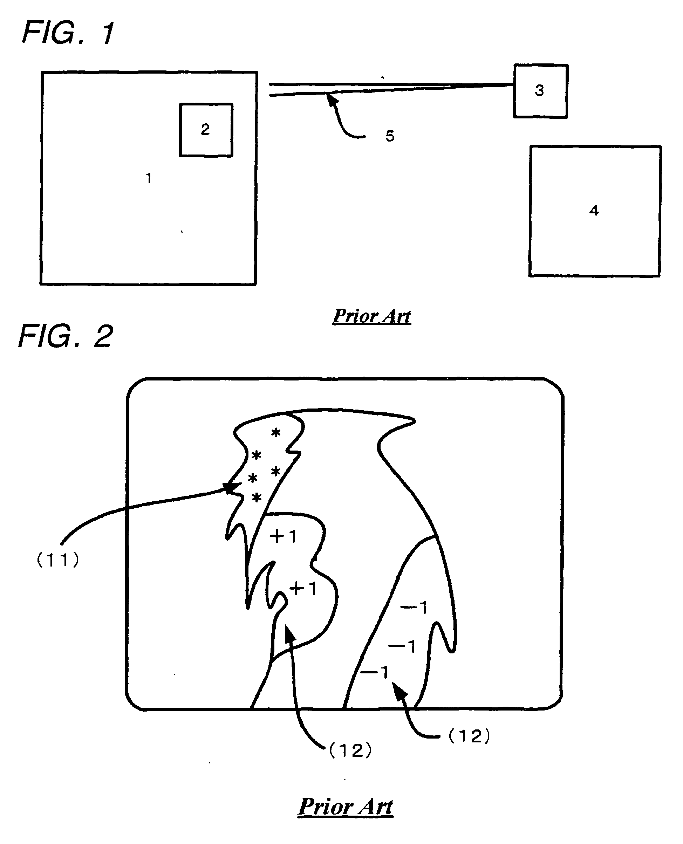

FIG. 1 shows a configuration used when a movie picture or a TV picture is taken by a video camera. Heretofore, a luminance at a certain point (position) of a subject 1 to be imaged by a video camera 4 has been measured under the condition that an illuminometer 2 is disposed adjacent to the point. Alternatively, a spot illuminometer 3 has also been used which is capable of being disposed adjacent to the video camera 4.

The following Patent Publication 1 discloses an exposure meter for a still camera. This exposure meter incorporates an imaging element (CCD). The exposure meter is operable, based on a video signal received from the imaging element, to calculate an amount of light incident on the imaging element, taking into account data about an aperture value and a shutter speed of the still camera, and a sensitivity (i.e., speed) and other characteristics of a photosensitive film, and to display a comparative exposure value (12) (+ 1EV, + 2EV, - 1EV, - 2EV, etc.) relative to a standard exposure value. FIG. 2 shows one example of a display image of the comparative value (12).
[Patent Publication 1] Japanese Patent No. 2632645 (FIGS. 1 to 3, paragraphs [0006], [0007], [0013], [0014] and [0022])

### DISCLOSURE OF THE INVENTION

### PROBLEM TO BE SOLVED BY THE INVENTION

The illuminometer 2 illustrated in FIG. 1 is not disposed adjacent to the video camera 4. Moreover, to obtain a luminance measurement at a plurality of points, it is necessary to rearrange the illuminometer 2 accordingly. Thus, the illuminometer 2 has poor usability.

The spot illuminometer 3 illustrated in FIG. 1 can be disposed adjacent to the video camera 4. In addition, the luminance measurement at a plurality of points can be performed only by changing a target position of the illuminometer 3. Thus, the illuminometer 3 has relatively high usability. However, a measurement angle 5 of the illuminometer 3 is about 1 degree, and therefore a measurement range becomes relatively large (i.e., measurement accuracy is relatively low).

The exposure meter disclosed in Patent Publication 1 is designed to calculate an exposure value on the basis of the standard exposure value. That is, the exposure meter cannot calculate a relative exposure value on the basis of an arbitrary point in a subject. Moreover, the exposure meter is intended to figure out a region (11) of a latitude of a film. Thus, the comparative exposure value (12) (+ 1EV, + 2EV, - 1EV, - 2EV, etc.) relative to the standard exposure value, in a region (12) falling within the latitude, is displayed with respect to a fairly large area (i.e., measurement accuracy is relatively low).

Further, an illuminometer or an exposure meter separated from a video camera or a still camera includes a specific manufacturing error. In other words, to accurately measure luminance or exposure value, it is necessary to continuously use one device.

The present invention includes at least one of the following objects:
to provide an apparatus (or method) capable of measuring a relative brightness with high usability;
to provide an apparatus (or method) capable of measuring a relative brightness with high measurement accuracy;
to provide an apparatus (or method) capable of measuring a relative exposure value or a relative aperture value in a simple manner; and
any other respects which will become apparent to those skilled in the art upon referring to an embodiment and the accompanying drawings.

### MEANS FOR SOLVING THE PROBLEM

There is provided an apparatus (30) which comprises acceptance means (41) adapted to accept therethrough a video signal having a predetermined gamma (γ) value, and correction means (43) adapted to correctively adjust the predetermined gamma (γ) value of a brightness component corresponding to a first position included in a content of the video signal, back to one. The correction means (43) is operable to correctively adjust the predetermined gamma (γ) value of a brightness component corresponding to a first position included in the content of the video signal, back to one, and to calculate a ratio between the gamma-corrected brightness component corresponding to the first position and the gamma-corrected brightness component corresponding to the second position.

The apparatus (30) the present invention may include display means (44) adapted to display the video signal thereon, designation means (45) adapted to designate the first position and the second position, and storage means (42) which stores a gamma-correction conversion expression therein. In this case, the correction means (43) may be operable, based on the gamma-correction conversion expression, to correctively adjust the predetermined gamma (γ) back to one.

A method which comprises the steps of: providing a video-signal output device (4); accepting a brightness component of a video signal corresponding to a first position of a subject (1) which is imaged by the video-signal output device (4); correcting a gamma (γ) value of the brightness component corresponding to the first position; accepting a brightness component of the image signal corresponding to a second position of the subject (1) which is imaged by the video-signal output device (4); correcting the gamma (γ) value of the brightness component corresponding to the second position; calculating a ratio between the gamma-corrected brightness component corresponding to the first position and the gamma-corrected brightness component corresponding to the second position; and displaying the ratio.

An apparatus (30) which comprises acceptance means (41) adapted to accept a video signal therethrough; storage means (42) adapted to store therein a relational expression representing a relationship between an F value and a brightness component of the video signal; and calculation means (43) adapted to calculate a ratio between an F value associated with a brightness component corresponding to a first position included in a content of the video signal, and an F value associated with a brightness component corresponding to a second position included in the content of the video signal.

The calculation means (43) may be operable to formulate the relational expression, based on a plurality of brightness compositions each of which corresponds to a calibration position included in the content of the video signal and which are associated with respective ones of a plurality of F values.

A method comprising the steps of: providing a video-signal output device (4); formulating a relational expression representing a relationship between an F value and a brightness component of a video signal; accepting a brightness component of a video signal corresponding to a first position of a subject (1) which is imaged by the video-signal output device (4); deriving an F value associated with the brightness component corresponding to the first position;
accepting a brightness component of the video signal corresponding to a second position of the subject (1) which is imaged by the video-signal output device (4); deriving an F value associated with the brightness component corresponding to the second position; calculating a ratio between the F value associated with the brightness component corresponding to the first position, and the F value associated with the brightness component corresponding to the second position; and displaying the ratio.

The step of formulating a relational expression representing a relationship between an F value and a brightness component of a video signal may include the steps of: setting an F value of the video-signal output device (4) to a plurality of values; accepting a plurality of brightness components of a video signal corresponding to a calibration position of the subject (4) which is imaged by the video-signal output device (4); and formulating the relational expression based on the plurality of F values and the plurality of brightness components.

### BRIEF DESCRIPTION OF DRAWINGS

FIG. 1 is a schematic diagram showing a configuration used when a movie picture or a TV picture is taken by a video camera.
FIG. 2 is a schematic diagram showing an example of a display image of a comparative value relative to a standard exposure value, in an exposure meter disclosed in Patent Publication 1.
FIG. 3 is a schematic diagram showing one example of a configuration when a movie picture or a TV picture is taken by a video camera, according to the present invention.
FIG. 4 is a block diagram schematically showing an apparatus of the present invention.
FIG. 5 is a schematic diagram showing an example of a user-viewable display image in the means 44.
FIG. 6 is a schematic diagram showing an example of a user-viewable display image in the means 44.
FIG. 7 is a schematic diagram showing an example of a user-viewable display image in the means 44.
FIG. 8 is a schematic diagram showing an example of a user-viewable display image in the means 44.
FIG. 9 is a schematic diagram showing an example of a user-viewable display image in the means 44.
FIG. 10 is a graph showing one example of a relationship between a brightness component of a video signal from the means 41 and an F value of a video camera 4.

### BEST MODE FOR CARRYING OUT THE INVENTION

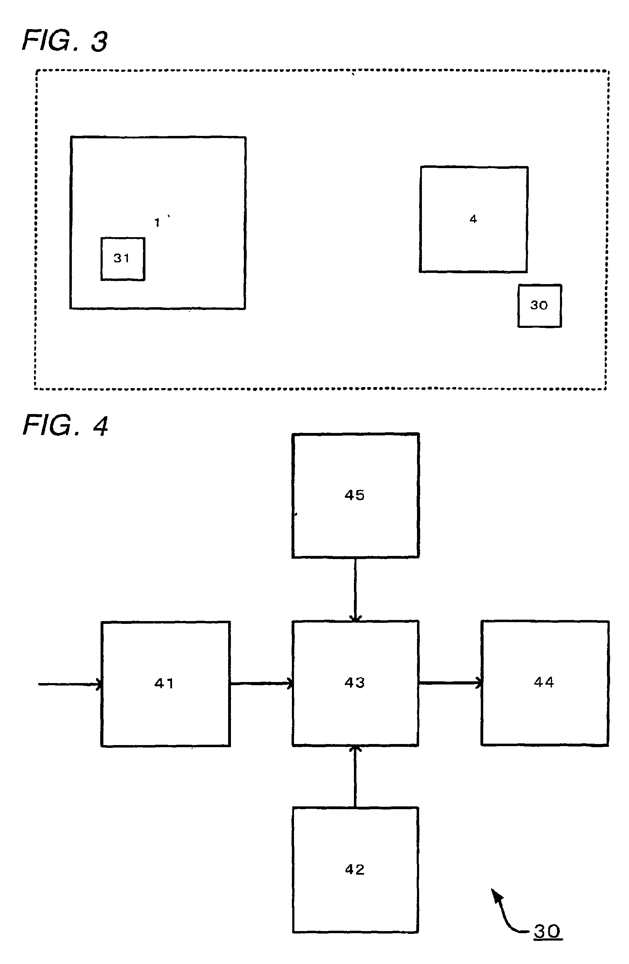

FIG. 3 shows one example of a configuration when a movie picture or a TV picture is taken by a video camera, according to the present invention. An object 31 having a predetermined reflectance is arranged in a subject 1 to be imaged by a video camera 4. The object 31 having a predetermined reflectance can be arranged at a position in such a manner as to allow the position to be used as a reference position. Preferably, the predetermined reflectance is 18%. Preferably, a color of the object 31 is gray. For example, the gray object 31 having a reflectance of 18% is a "uniform density plate" available from FUJIFILM Corp. The gray object 31 having a reflectance of 18% is often used in the field of movie or television shooting, to obtain a reference value of brightness (standard exposure value). Thus, the gray object 31 having a reflectance of 18% may be used to obtain a standard exposure value in the present invention.

FIG. 4 is a block diagram schematically showing an apparatus 30 of the present invention. As shown in FIG. 4, the apparatus 30 of the present invention (e.g., a relative brightness measuring apparatus or a waveform monitor) comprises means 41 adapted to accept a video signal therethrough (e.g., an input terminal), means 42 adapted to store data therein (e.g., a memory or a HD), means 43 adapted to calculate a ratio between a brightness component of the video signal corresponding to a first position, and a brightness component of the video signal corresponding to a second position (e.g., a CPU), means 44 adapted to display the video signal thereon (e.g., a display unit), and means 45 (e.g., a button or a knob) adapted to designate the first position and the second position.

Differently from a brightness component of a video signal to be output from a still camera or the imaging element (CCD) disclosed in the Patent Publication 1, a brightness component of a video signal to be output from the video camera 4 is not proportional to a light intensity or an amount of light received therein. Specifically, the video camera 4 conformable to broadcast standards and capable of outputting a video signal with a gamma (γ) value of 0.45 to negate a gamma (γ) value of 2.2, which is a characteristic value of a cathode ray tube of a television. Thus, when the video camera 4 equipped with the gamma correction circuit conformable to the broadcast standards outputs a video signal to the apparatus 30 of the present invention, a brightness component of the video signal is the 0.45-th power of a light intensity or an amount of light received therein. The video camera 4 includes another type equipped with an original gamma correction circuit which is not conformable to the broadcast standards and is capable of adjusting a gamma (γ) characteristic. The configuration of the original gamma correction circuit varies depending on a manufacturer of the video camera 4. The following description relates to two embodiments: a first embodiment where the video camera 4 has the gamma correction circuit conformable to the broadcast standards; and a second embodiment where the video camera 4 has the original gamma correction circuit.

### [EMBODIMENT where the video camera 4 has the gamma correction circuit adapted to output a video signal with a gamma (γ) value of 0.45]

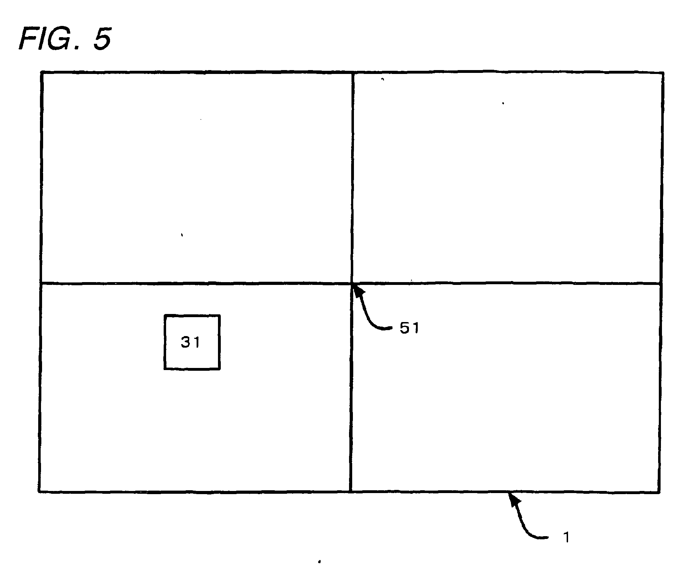

An output mode of the video camera 4 is set such that a gamma (γ) value = 0.45, and the means 41 accepts a video signal having a gamma (γ) value of 0.45. The video signal is sent from the means 41 to the means 44 via the means 43. The means 44 displays the video signal thereon. FIGS. 5 to 9 show various examples of a user-viewable display image in the means 44. As shown in FIG. 5, the means 44 displays the subject 1 imaged by the video camera 4, wherein the object 31 having the predetermined reflectance is included in the subject 1.

A user of the apparatus 30 of the present invention manually operates the means 45 to set a certain point in the object 31 as a first point (reference point). The means 45 accepts the selection (start of setting of the first position) input by the user, and outputs the user's selection into the means 43. In response to recognizing the start of setting of the first position, the means 43 creates data for a marker, and outputs the data to the means 44. For example, the marker consists of an intersecting point (circular point) 51 between a straight line extending in a horizontal axis direction and a straight line extending in a vertical axis direction.

The user manually operates the means 45 while visually checking a content of the video signal, so as to move the marker 51 to a certain point in the object 31. The means 45 accepts the additional selection (adjustment of the first position; movement in the vertical axis direction and/or movement in the vertical axis direction) input from the user, and the means 43 creates data for a marker conforming to the user's selection. Thus, the means 44 displays a movement of the marker 51 in conformity with the user's selection.

Upon completion of the movement of the marker 51, the means 45 accepts a selection (completion of setting of the first position) input by the user, and outputs the user's selection to the means 43. In response to recognizing the completion of setting of the first position, the means 43 acquires a brightness component (based on a gamma (γ) value of 0.45) of a video signal (having a line number and a sampling number) corresponding to the position (first position) of the marker 51. When the video signal consists of (luminance, primary chrominance and secondary chrominance) components or (X-stimulus value, Y-stimulus value and Z-stimulus value) components, the brightness component of the video signal is a luminance component (Y) or a Y-stimulus value component (Y). When the video signal consists of (Red, Green and Blue) components, the means 43 is operable to read a luminance conversion expression (e.g., NTSC : Y = 0.2990R + 0.5864G + 0.1146B; HDTV : Y = 0.2126R + 0.7152G + 0.0722B) from the means 42, and calculate the luminance component (Y), based on the Red component, the Green component and the Blue component.

Then, the means 43 reads a gamma-conversion expression for a gamma (γ) value of 2.2 (e.g., Vs = [(Vr + 0099) / 1.099]^{(1/0.45)}, wherein Vr is the luminance component of the video signal, and Vs is a normalized luminance component after the gamma correction) from the means 42, and correctively adjusts the gamma (γ) value of a brightness component of the video signal corresponding to the first position, back to one. The means 43 then stores the gamma-corrected brightness component (gamma (γ) value = 1.0) of the video signal corresponding to the first position, in the means 42. The gamma-corrected brightness component of the video signal corresponding to the first position is proportional to the light intensity or an amount of light received.

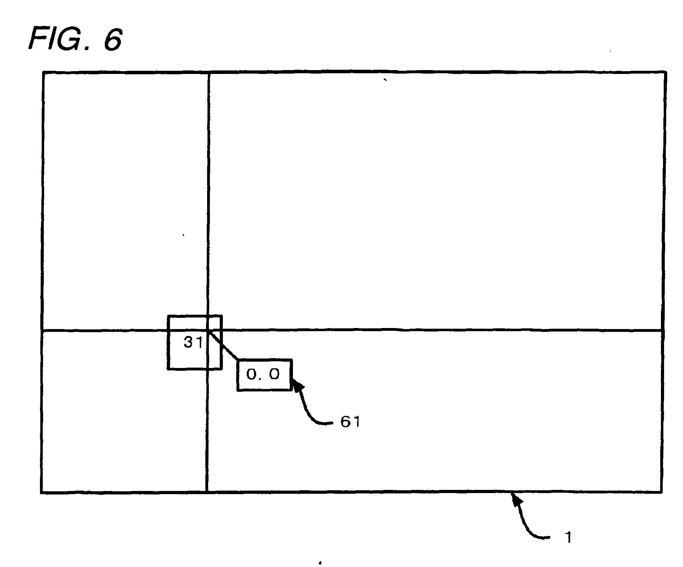

In response to recognizing the completion of setting of the first position, the means 43 creates data for a marker indicative of a standard of brightness, and outputs the data to the means 44. The means 44 displays a marker indicative of a standard of brightness [e.g., a marker 61 (or a rectangular or circular) pointing to the first position and indicating "0.0"], as shown in FIG. 6.

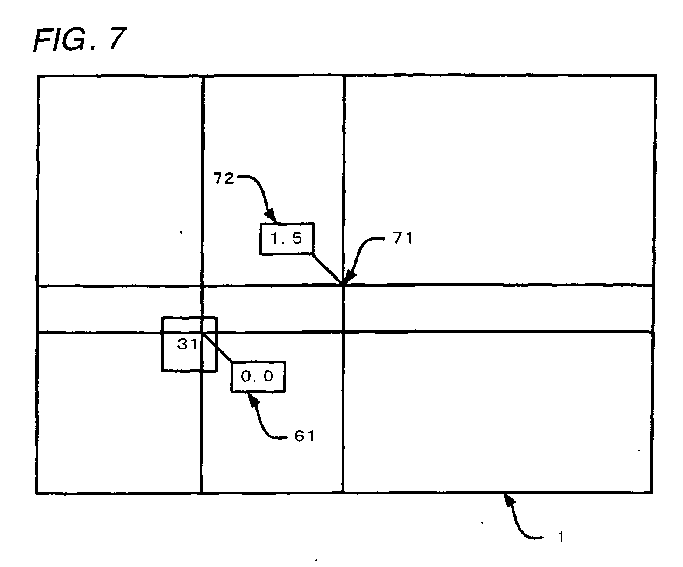

Then, the user of the apparatus 30 of the present invention manually operates the means 45 to set a desired point (target) in the subject 1 imaged by the video camera 4, as a second position (measurement position). The means 45 accepts the selection (start of setting of the second position) input by the user, and outputs the user's selection into the means 43. In response to recognizing the start of setting of the second position, the means 43 creates data for a marker, and outputs the data to the means 44. For example, the marker consists of an intersecting point (circular point) 71 (see FIG. 7) between a straight line extending in the horizontal axis direction and a straight line extending in the vertical axis direction.

In response to recognizing the start of setting of the second position, the means 43 acquires a brightness component (based on a gamma (γ) value of 0.45) of the video signal corresponding to the position (second position) of the marker 71. Then, the means 43 reads the gamma-conversion expression for a gamma (γ) value of 2.2, from the means 42, and obtains a gamma-corrected brightness component (gamma (γ) value = 1.0) of the video signal corresponding to the second position. The means 43 reads the gamma-corrected brightness component (gamma (γ) value = 1.0) of the video signal corresponding to the first position, from the means 42. Then, the means 43 calculates a ratio (relative brightness) between the gamma-corrected brightness component of the video signal corresponding to the first position, and the gamma-corrected brightness component of the video signal corresponding to the second position. The means 43 creates data for a marker indicative of the relative brightness, and outputs the data to the means 44. The means 44 displays a marker indicative of the relative brightness [e.g., a marker 72 (or a rectangular or circular box) pointing to the second position and indicating a value (e.g., 1.5) of the relative brightness], as shown in FIG. 7.

The relative brightness (the gamma-corrected brightness component of the video signal corresponding to the second position / the gamma-corrected brightness component of the video signal corresponding to the first position) can also be considered as a relative exposure value (relative EV). Thus, the relative brightness corresponds to the relative EV. However, when the relative brightness is less than one, an inverse (the gamma-corrected brightness component of the video signal corresponding to the first position / the gamma-corrected brightness component of the video signal corresponding to the second position) of the relative brightness can be considered as a relative EV (negative value).

Alternatively, the relative brightness x 1.4 (or the relative EV) can be considered as a relative aperture value. Thus, a value obtained by multiplying the relative brightness (or relative EV) by 1.4 corresponds to a relative F value.
The means 43 may be configured to calculate the relative F value, and the means 44 may be configured to display the relative F value thereon.

The user may manually operate the means 45 while visually checking the content of the video signal, so as to move the marker 71 to a desired point (target) in the subject 1. The means 45 accepts the additional selection (adjustment of the second position; movement in the vertical axis direction and/or movement in the vertical axis direction) input from the user, and the means 43 creates data for a marker conforming to the user's selection. Thus, the means 44 displays a relative brightness in conjunction with a movement of the marker 71 conforming to the user's selection.

The user can instruct the apparatus 30 to store a position of the marker 71. For example, respective relative brightness values of a plurality of second positions can be displayed together with the second positions.

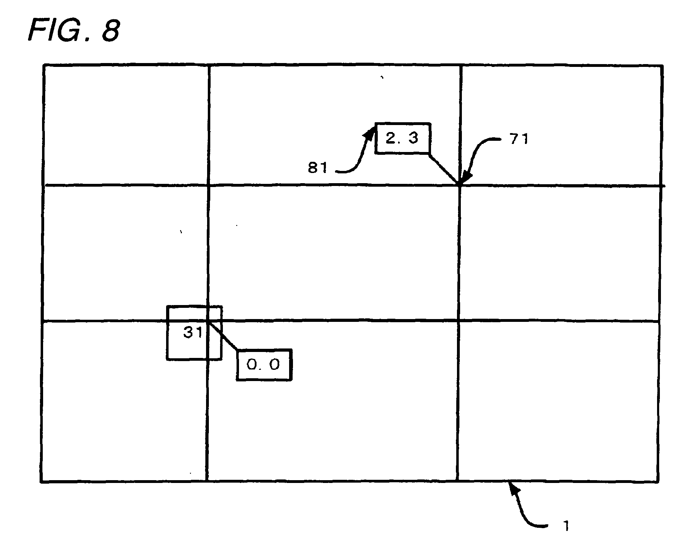

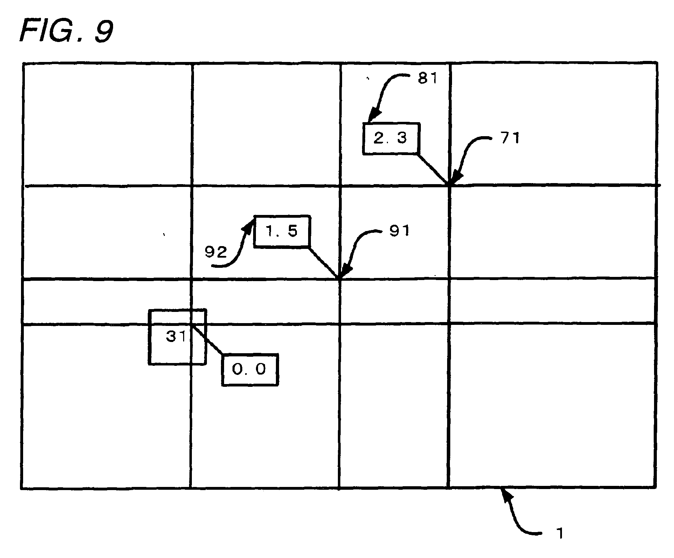

The means 45 accepts a selection (storage of a second position) input by the user, and the means 43 stores data for a maker indicative of a relative brightness corresponding to a second position at a time when the storage of the second position is recognized, in the means 42. During this operation, the means 44 continuously displays the marker 81 (see FIGS. 8 and 9).

The user may manually operate the means 45 so as to move the marker 71 (second position) to a desired point (additional target) in the subject 1. The means 45 accepts the additional selection (adjustment of the additional second position) input by the user, and the means 43 creates data for a marker conforming to the user's selection. Thus, the means 44 displays a relative brightness 92 in conjunction with a movement of the marker 91 conforming to the user's selection (see FIG. 9).

Upon completion of the movement of the marker 91, the means 45 accepts a selection (completion of setting of the second position) input from the user, and outputs the user's selection to the means 43. In response to recognizing the completion of setting of the second position, the means 43 deletes the data about the markers 51, 61, 71, 81, 91, 92. Further, the means 44 terminates the display of all the markers, and the apparatus 30 terminates the relative brightness measurement.

The means 44 may be configured to display only the markers 71, 72 in FIG. 7. Alternatively, the means 44 may be configured to display only the markers 61, 71, 72 in FIG. 7. Further, the means 44 may be configured to terminate the display of only the marker 71 in FIG. 9.

While the number of second positions in the above embodiment is two (markers 81, 92), it may be one or may be three or more. In the above embodiment, the marker 72 is displayed in conjunction with the movement of the second position. Alternatively, during the course of the movement of the second position, the marker 72 may not be displayed or the means 43 may stop the calculation of a relative brightness.

It is understood that various changes and modifications may be made in the first embodiment without departing from the spirit and scope of the present invention.

### [EMBODIMENT where the video camera 4 has the original gamma correction circuit]

In the first embodiment, the means 43 is configured to correctively adjust a brightness component (gamma (γ) value = 0.45) of a video signal from the means 41, using the gamma-correction conversion expression for a gamma (γ) value of 2.2, so as to obtain a gamma-corrected brightness component (gamma (γ) value = 1.0) of the video signal. In contrast, when the video camera 4 is equipped with the original gamma correction circuit, a gamma curve or a gamma value of the video camera 4 is unknown, and thereby a gamma-correction conversion expression for a predetermined gamma (γ) value cannot be used. Thus, in the second embodiment, the means 43 is configured to formulate a relational expression representing a relationship between a brightness component of a video signal from the means 41, and an F value of the video camera 4, and calculate a relative aperture value, a relative exposure value or a relative brightness, based on the conversion expression.

An output mode of the video camera 4 is set at an original gamma value or curve, and the means 41 accepts a video signal having the original gamma (γ) value. The video signal is sent from the means 41 to the means 44 via the means 43. The means 44 displays the video signal thereon. As shown in FIG. 5, the means 44 displays the subject 1 imaged by the video camera 4, wherein the object 31 having the predetermined reflectance is included in the subject 1.

### (CALIBRATION)

A user of the apparatus 30 of the present invention manually operates the means 45 to set a certain point in the object 31 as a calibration point. The means 45 accepts the selection (start of setting of the calibration position) input by the user, and outputs the user's selection to the means 43. In response to recognizing the start of setting of the calibration position, the means 43 creates data for a marker, and outputs the data to the means 44. For example, the marker consists of an intersecting point (circular point) 51 between a straight line extending in the horizontal axis direction and a straight line extending in the vertical axis direction.

The user manually operates the means 45 while visually checking a content of the video signal, so as to move the marker 51 to a certain point in the object 31. The means 45 accepts the additional selection (adjustment of the calibration position; movement in the vertical axis direction and/or movement in the vertical axis direction) input by the user, and the means 43 creates data for a marker conforming to the user's selection. Thus, the means 44 displays a movement of the marker 51 in conformity with the user's selection.

Upon completion of the movement of the marker 51, the means 45 accepts a selection (completion of setting of the calibration position) input by the user, and outputs the user's selection to the means 43. In response to recognizing the completion of setting of the calibration position, the means 43 carries out preparations for formulating a relational expression representing a relationship between a brightness component of the video signal from the means 41, and an F value of the video camera 4.

Specifically, the means 43 reads F-value data (i.e., data consisting of a plurality of F values, such as 22.0, 16.0, 11.0, 8.0, 5.6, 4.0, 2.8 and 2.0) from the means 42, and waits for an input of a brightness component of a video signal corresponding to the largest F value.

When the F value of the video camera 4 is set at 22.0, for example, by a user of the video camera 4, the means 41 accepts a video signal corresponding to the largest F value of 22.0. The user of the apparatus 30 of the present invention manually operates the means 45 to acquire a brightness component of the video signal. The means 45 accepts the selection (acquisition of the brightness component) input by the user, and outputs the user's selection to the means 43. In response to recognizing the acquisition of the brightness component, the means 43 stores the brightness component of the video signal associated with the F value "22.0", in the means 42.

Then, the means 43 waits for an input of a brightness component of a video signal corresponding to the second-largest F value. When the F value of the video camera 4 is set at 16.0, the means 41 accepts a video signal corresponding to the second-largest F value of 16.0. The means 45 accepts a selection (acquisition of a brightness component) input by the user. In response to recognizing the acquisition of the brightness component, the means 43 stores the brightness component of the video signal associated with the F value "16.0", in the means 42.

The F value of the video camera 4 is sequentially set at 11.0, 8.0, 5.6, 4.0, 2.8 and 2.0, and the means 43 sequentially stores respective brightness components of video signals associated with F values "11.0" to "2.0", in the means 42.

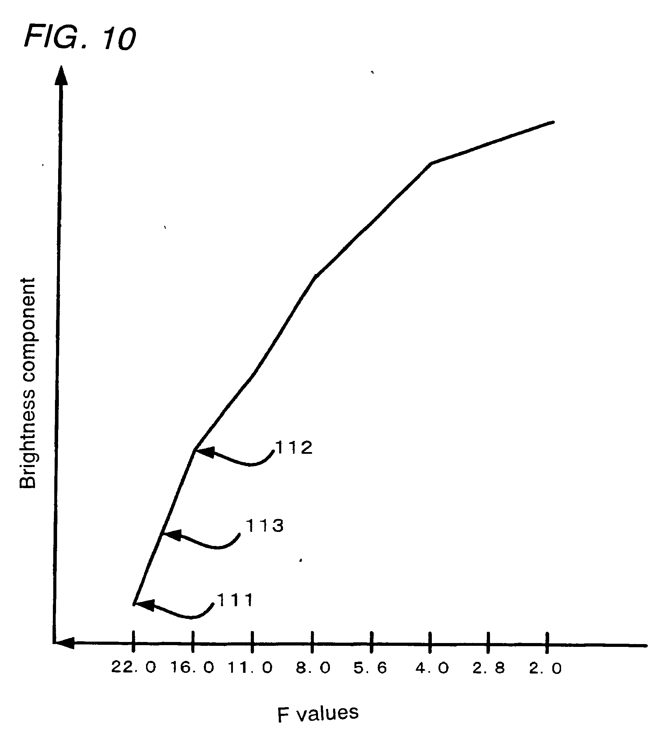

After storing the brightness component of the video signal associated with the smallest F value, the means 43 formulates a relational expression representing a relationship between the brightness component of the video signal from the means 41, and the F value of the video camera 4, and stores the relational expression in the means 42. A relational expression (curve) illustrated in FIG. 10 includes a straight line obtained from two of the adjacent F values and brightness components associated therewith. Specifically, the relational curve includes a straight line 113 connecting a point 111 defined by the F value "22.0" and the brightness component associated with the F value "22.0", and a point 112 defined by the F value "16.0" and the brightness component associated with the F value "16.0". While the relational curve illustrated in FIG. 11 consists of seven straight lines, it may be modified as one or more approximate expressions or approximate curves based on the eight brightness components. Further, while the relational curve illustrated in FIG. 11 consists of seven straight lines, it may be stored in the means 42 in the form of a look-up table based on the seven straight lines.

### (MEASUREMENT)

The video camera 4 is set at one (e.g., 5.6) of the F values except the largest F value and the smallest F value.

The user of the apparatus 30 of the present invention manually operates the means 45 to set a certain point in the object 31 as a first position (reference position). The means 45 accepts the selection (start of setting of the first position) input from the user, and outputs the user's selection into the means 43. In response to recognizing the start of setting of the first position, the means 43 creates data for a marker, and outputs the data to the means 44.

According to need, the user manually operates the means 45 while visually checking a content of the video signal, so as to move the marker 51 to a certain point in the object 31. The means 45 accepts the additional selection (adjustment of the first position; movement in the vertical axis direction and/or movement in the vertical axis direction) input by the user, and the means 43 creates data for a marker conforming to the user's selection. Thus, the means 44 displays a movement of the marker 51 in conformity to the user's selection.

Upon completion of the movement of the marker 51, the means 45 accepts a selection (completion of setting of the first position) input by the user, and outputs the user's selection to the means 43. In response to recognizing the completion of setting of the first position, the means 43 acquires a brightness component (based on the original gamma (γ) value) of a video signal (having a line number and a sampling number) corresponding to the position (first position) of the marker 51.

Then, the means 43 reads the relational expression representing the relationship between the F value and the brightness component of the video signal, from the means 42, and derives an F value associated with the brightness component of the video signal corresponding to the first position. The means 43 stores the derived F value in the means 42.

In response to recognizing the completion of setting of the first position, the means 43 creates data for a marker indicative of a standard of brightness, and outputs the data to the means 44. The means 44 displays a marker indicative of a standard of brightness [e.g., a marker 61 (or a rectangular or circular) pointing to the first position and indicating "0.0"], as shown in FIG. 6.

Then, the user of the apparatus 30 of the present invention manually operates the means 45 to set a desired point (target) in the subject 1 imaged by the video camera 4, as a second position (measurement position). The means 45 accepts the selection (start of setting of the second position) input by the user, and outputs the user's selection to the means 43. In response to recognizing the start of setting of the second position, the means 43 creates data for a marker, and outputs the data to the means 44.

In response to recognizing the start of setting of the second position, the means 43 acquires a brightness component (based on the original gamma (γ) value) of the video signal corresponding to the position (second position) of the marker. Then, the means 43 reads the relational expression representing the relation between the brightness components and the F value, from the means 42, and derives an F value associated with the brightness component of the video signal corresponding to the second position. The means 43 reads the F value associated with the brightness component of the video signal corresponding to the first position, from the means 42. Then, the means 43 calculates a ratio (relative aperture value) between the F value associated with the brightness component of the video signal corresponding to the first position, and the F value associated with the brightness component of the video signal corresponding to the second position.

The relative aperture value / 1.4 can be considered a relative brightness or a relative exposure value. However, when the relative aperture value is less than one, an inverse (the F value associated with the brightness component of the video signal corresponding to the first position / the F value associated with the brightness component of the video signal corresponding to the second position) of the relative aperture value can be considered as a relative EV (negative value). The means 43 may be configured to calculate the relative brightness or the relative exposure value.

The means 43 creates data for a maker indicative of the relative brightness, the relative exposure value or the relative aperture value, and outputs the data to the means 44. The means 44 displays a marker indicative of the relative brightness [e.g., a marker (or a rectangular or circular) pointing to the second position and indicating a value of the relative brightness, the relative exposure value or the relative aperture value].

The user may manually operate the means 45 while visually checking the content of the video signal, so as to move the marker to a desired point (target) in the subject 1. The means 45 accepts the additional selection (adjustment of the second position; movement in the vertical axis direction and/or movement in the vertical axis direction) input by the user, and the means 43 creates data for a marker conforming to the user's selection. Thus, the means 44 displays a relative brightness, a relative exposure value or relative aperture value in conjunction with a movement of the marker conforming to the user's selection.

The user can instruct the apparatus 30 to store a position of the marker. For example, respective relative brightness values, relative exposure values or relative aperture values of a plurality of second positions can be displayed together with the second positions.

The means 45 accepts a selection (storage of a second position) input by the user, and the means 43 stores data for a maker indicative of a relative brightness, a relative exposure value or a relative aperture value corresponding to a second position at a time when the storage of the second position is recognized, in the means 42. During this operation, the means 44 continuously displays the marker.

The user may manually operate the means 45 so as to move the marker (second position) to a desired point (additional target) in the subject 1. The means 45 accepts the additional selection (adjustment of the additional second position) input by the user, and the means 43 creates data for a marker conforming to the user's selection. Thus, the means 44 displays a relative brightness, a relative exposure value or a relative aperture value in conjunction with a movement of the marker conforming to the user's selection.

Upon completion of the movement of the marker, the means 45 accepts a selection (completion of setting of the second position) input by the user, and outputs the user's selection to the means 43. When the means 43 recognizes the completion of setting of the second position, the apparatus 30 terminates the measurement of a relative brightness, a relative exposure value or a relative aperture value.

While the F-value data in the above embodiment consists of 22.0, 16.0, 11.0, 8.0, 5.6, 4.0, 2.8 and 2.0, it may further include 1.9, 1.6 and 1.3. The F-value data may conform to the F value of a lens of the video camera. The number of F values is at least two.

In the above embodiment, the calibration operation is performed once. Alternatively, the calibration operation may be performed for plural types of video cameras to formulate a relational expression of representing a relationship between a brightness component of a video signal, and an F value of each of the video cameras (i.e., the plurality of relational expressions for respective video cameras), so that an F value associated with a first or second position can be derived based on one of the relational expressions which is selected by a user.

It is understood that various changes and modifications may be made in the second embodiment without departing from the spirit and scope of the present invention.

## Claims

1. An apparatus (30) comprising:
acceptance means (41) adapted to accept therethrough a video signal having a predetermined gamma (γ) value; and
correction means (43) adapted to correctively adjust said predetermined gamma (γ) value of a brightness component corresponding to a first position included in a content of said video signal, back to one,
wherein said correction means (43) is operable to correctively adjust said predetermined gamma (γ) value of a brightness component corresponding to a first position included in the content of said video signal, back to one, and to calculate a ratio between said gamma-corrected brightness component corresponding to said first position and said gamma-corrected brightness component corresponding to said second position.

2. The apparatus (30) as defined in claim 1, which further comprises display means (44) adapted to display said video signal thereon.

3. The apparatus (30) as defined in claim 1, which further comprises designation means (45) adapted to designate said first position and said second position.

4. The apparatus (30) as defined in claim 1, which further comprises storage means (42) which stores a gamma-correction conversion expression therein, wherein said correction means (43) is operable, based on said gamma-correction conversion expression, to correctively adjust said predetermined gamma (γ) back to one.

5. The apparatus (30) as defined in claim 1, wherein said ratio is a relative exposure value or a relative aperture value.

6. The apparatus (30) as defined in claim 1, which is a waveform monitor.

7. A method comprising the steps of:
providing a video-signal output device (4);
accepting a brightness component of a video signal corresponding to a first position of a subject (1) which is imaged by said video-signal output device (4);
correcting a gamma (γ) value of said brightness component corresponding to said first position;
accepting a brightness component of said image signal corresponding to a second position of said subject (1) which is imaged by said video-signal output device (4);
correcting said gamma (γ) value of said brightness component corresponding to said second position;
calculating a ratio between said gamma-corrected brightness component corresponding to said first position and said gamma-corrected brightness component corresponding to said second position; and
displaying said ratio.

8. The method as defined in claim 7, which further comprises the step of arranging an object (31) having a predetermined reflectance, in said subject (1) to be imaged by said video-signal output device (4), wherein said first position corresponds to a position of said object (31).

9. An apparatus (30) comprising:
acceptance means (41) adapted to accept a video signal therethrough;
storage means (42) adapted to store therein a relational expression representing a relationship between an F value and a brightness component of said video signal; and
calculation means (43) adapted to calculate a ratio between an F value associated with a brightness component corresponding to a first position included in a content of said video signal, and an F value associated with a brightness component corresponding to a second position included in the content of said video signal.

10. The apparatus (30) as defined in claim 9, wherein said calculation means (43) is operable to formulate said relational expression, based on a plurality of brightness compositions each of which corresponds to a calibration position included in the content of said video signal and which are associated with respective ones of a plurality of F values.

11. The apparatus (30) as defined in claim 9, which further comprises display means (44) adapted to display said video signal thereon.

12. The apparatus (30) as defined in claim 9, wherein said ratio is a relative exposure value or a relative aperture value.

13. The apparatus (30) as defined in claim 9, which is a waveform monitor.

14. A method comprising the steps of:
providing a video-signal output device (4);
formulating a relational expression representing a relationship between an F value and a brightness component of a video signal;
accepting a brightness component of a video signal corresponding to a first position of a subject (1) which is imaged by said video-signal output device (4);
deriving an F value associated with said brightness component corresponding to said first position;
accepting a brightness component of said video signal corresponding to a second position of said subject (1) which is imaged by said video-signal output device (4);
deriving an F value associated with said brightness component corresponding to said second position;
calculating a ratio between said F value associated with said brightness component corresponding to said first position, and said F value associated with said brightness component corresponding to said second position; and
displaying said ratio.

15. The method as defined in claim 14, which further comprises the step of arranging an object (31) having a predetermined reflectance, in said subject (1) to be imaged by said video-signal output device (4), wherein said first position corresponds to a position of said object (31).

16. The method as defined in claim 14, wherein said step of formulating a relational expression representing a relationship between an F value and a brightness component of a video signal includes the steps of:
setting an F value of said video-signal output device (4) to a plurality of values;
accepting a plurality of brightness components of a video signal corresponding to a calibration position of said subject (4) which is imaged by said video-signal output device (4); and
formulating said relational expression based on said plurality of F values and said plurality of brightness components.

17. The method as defined in claim 16, which further comprises the step of arranging an object (31) having a predetermined reflectance, in said subject (1) to be imaged by said video-signal output device (4), wherein said first position corresponds to a position of said object (31).
